# EUROPÄISCHE PATENTSCHRIFT

(11) **EP 3 705 754 B1**
(45) Veröffentlichungstag und Bekanntmachung des Hinweises auf die Patenterteilung: **28.04.2021**
(21) Anmeldenummer: 19161214.2
(22) Anmeldetag: 07.03.2019
(51) Int. Cl.: F16H 57/021, F24F 13/14, F16H 57/031, F16H 57/032, F16H 57/02, F24D 19/10

(54) **STELLKLAPPENREDUKTIONSGETRIEBE**
REGULATING FLAP REDUCTION GEAR
ENGRENAGE RÉDUCTEUR DE CLAPET DE REGULATION

(43) Veröffentlichungstag der Anmeldung: 09.09.2020
(73) Patentinhaber: Gruner AG, 78564 Wehingen (DE)
(72) Erfinder: Dillinger, Kevin, 78549 Spaichingen (DE); Spreitzer, Wolfgang, 78564 Wehingen (DE)
(74) Vertreter: Kohler Schmid Möbus Patentanwälte

(56) Entgegenhaltungen:
- JP-A- S62 126 840
- US-A1- 2005 109 142
- US-A1- 2015 075 311
- US-A1- 2016 238 106

## Beschreibung

Die vorliegende Erfindung betrifft ein Stellklappenreduktionsgetriebe für eine elektrisch angetriebene Stellklappe zur Regelung eines Gas- oder Flüssigkeitsvolumenstroms, insbesondere auf dem Gebiet Heizung, Lüftung, Klima, Brand- oder Rauchschutz, gemäß dem Oberbegriff von Anspruch 1,

Ein derartiges Stellklappenreduktionsgetriebe ist beispielsweise durch die US 2015/075311 A1 oder die JP S62 126840 A bekannt geworden.

Das Dokument US2015/075311 A1 offenbart ein Stellklappenreduktionsgetriebe mit den Merkmalen im Oberbegriff des Anspruchs 1.

Bei bekannten Stellklappenreduktionsgetrieben sind Getriebeteile des Reduktionsgetriebes zwischen zwei parallelen Lagerplatten drehbar angeordnet. Die beiden Lagerplatten sind dabei mit Gewindebolzen verschraubt, die zugleich auch als Abstandshalter zwischen den beiden Lagerplatten dienen.

In der WO 2005/090831 A1 wird ein Reduktionsgetriebe eines elektrischen Stellglieds zur Regelung eines Gas- oder Flüssigkeitsvolumenstroms beschrieben. Das Reduktionsgetriebe ist in zwei Gehäusemodulen realisiert, so dass der Abtrieb mit verschiedenen Antriebsmotoren kombinierbar ist.

Demgegenüber ist es die Aufgabe der vorliegenden Erfindung, bei einem Stellklappenreduktionsgetriebe den Aufbau weiter zu vereinfachen.

Diese Aufgabe wird erfindungsgemäß durch ein Stellklappenreduktionsgetriebe mit den Merkmalen von Anspruch 1 gelöst.

Vorzugsweise sind die Verbindungselemente einstückig mit der ersten Lagerplatte ausgebildet. Da beim Zusammenbau und beim Auseinanderbau weniger Einzelteile verarbeitet werden müssen, ergibt sich ein einfacherer Aufbau des Stellklappenreduktionsgetriebes. Außerdem weisen die Laschen eine gute Stabilität auf, da sie in der gleichen Dicke wie die erste Lagerplatte ausgeführt sind. Bevorzugt sind die beiden Lagerplatten aus Metall gefertigt und jeweils ein Stanzteil oder ein Laserzuschnitt (weitere denkbare Herstellverfahren sind 3D-Druck von Metall oder auch Metallsinter, etc.). Die Laschen bilden somit einen Drehanschlag für das verschwenkbare Getriebeteil aus. Vorzugsweise liegt das verschwenkbare Getriebeteil in seinen beiden Endstellungen jeweils an zwei unterschiedlichen Laschen an. Separate Bauteile zur Realisierung eines Drehanschlages sind nicht erforderlich, so dass sich der Aufbau des Stellklappenreduktionsgetriebes weiter vereinfacht.

Vorzugsweise liegt der mindestens eine seitliche Vorsprung in der Ebene der Lasche und weisen die Laschen jeweils beidseitig einen seitlichen Vorsprung auf.

Die in die zweite Lagerplatte eingesteckten, freien Laschenenden und/oder der mindestens eine, an der zweiten Lagerplatte anliegende, seitliche Vorsprung ist mit der zweiten Lagerplatte stoffschlüssig verbunden, insbesondere (laser)verschweißt, um die beiden Lagerplatten und die dazwischen angeordneten Getriebeteile dauerhaft aneinander zu befestigen.

Vorzugsweise liegt das verschwenkbare Getriebeteil in seinen beiden Endstellungen jeweils an zwei unterschiedlichen Laschen an.

Die Verstärkungen können beispielsweise durch zwei in die Lageröffnung radial nach innen hineinragende, konvexe Wölbungen gebildet sein, die zusammen mit der gegenüberliegenden Lageröffnungswandung eine spielfreie Dreipunktlagerung für die in der Lageröffnung aufgenommene Abtriebswelle der Stellklappe bilden.

Das verschwenkbare Getriebeteil weist vorteilhaft zwei in Drehrichtung weisende Stirnflächen auf, die in den beiden Endstellungen jeweils an einer Lasche anschlagen. Beispielsweise kann ein segmentiertes Zahnrad des verschwenkbaren Getriebeteils diese beiden Stirnflächen aufweisen.

Vorzugsweise bildet das verschwenkbare Getriebeteil einen Abtrieb des Stellklappenreduktionsgetriebes aus, an dem eine Stellklappe drehfest befestigt ist. Durch das Stellklappenreduktionsgetriebe kann die Stellklappe dabei sehr feingradig verstellt werden, sodass die gewünschte Position der Stellklappe exakt eingestellt werden kann.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigen:
- Fig. 1: eine Explosionsdarstellung eines erfindungsgemäßen Stellklappenreduktionsgetriebes; und
- Fig. 2: eine Draufsicht auf eine erste Lagerplatte des Stellklappenreduktionsgetriebes von Fig. 1.

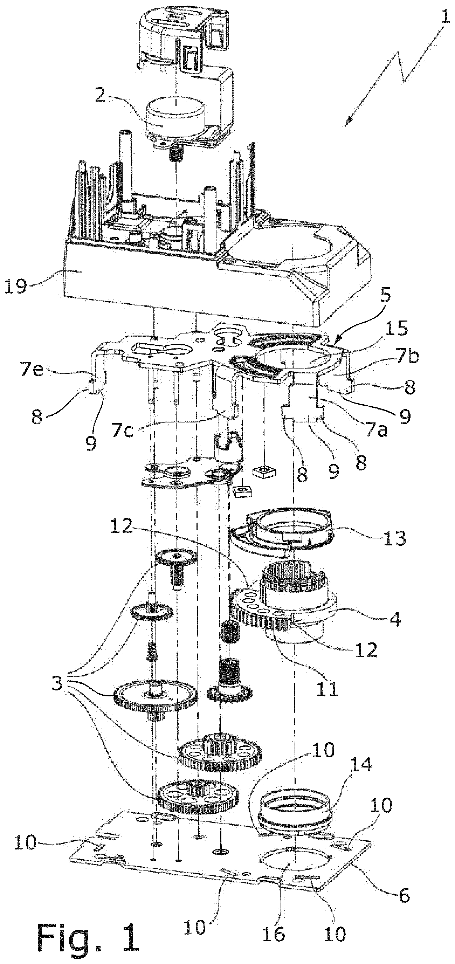

Das in **Fig. 1** dargestellte Stellklappenreduktionsgetriebe **1** wird durch einen Elektromotor **2** angetrieben und umfasst mehrere Getriebeteile **3**, **4**, die zwischen zwei parallelen Lagerplatten **5**, **6** drehbar angeordnet sind. Vorzugsweise sind die beiden Lagerplatten 5, 6 aus Metall und jeweils ein Stanzteil oder ein Laserzuschnitt.

Die eine, obere Lagerplatte 5 weist mehrere, hier beispielhaft fünf, Laschen **7a-7e** auf, die aus der Plattenebene der oberen Lagerplatte 5 um 90° umgebogen sind. Die Laschen 7a-7e haben beidseitig jeweils einen seitlichen Vorsprung **8**, der in der Laschenebene liegt. Im montierten Zustand des Reduktionsgetriebes 1 sind die Laschen 7a-7e mit ihren freien Laschenenden **9** in Stecköffnungen **10** der anderen, unteren Lagerplatte 6 passgenau bzw. spielfrei eingesteckt, bis sie mit ihren beiden seitlichen Vorsprüngen 8 an der unteren Lagerplatte 6 anliegen. Die Laschen 7a-7e bilden somit Abstandshalter, welche die beiden Lagerplatten 5, 6 in einem Abstand zueinander halten. Die in die untere Lagerplatte 6 eingesteckten, freien Laschenenden 9 und/oder die an der unteren Lagerplatte 6 anliegenden, seitlichen Vorsprünge 8 sind mit der unteren Lagerplatte 6 verschweißt, insbesondere laserverschweißt, um die beiden Lagerplatten 5, 6 und die dazwischen angeordneten Getriebeteile 3, 4 dauerhaft aneinander zu befestigen.

Das im Antriebsstrang letzte Getriebeteil 4, an dem eine Stellklappe (nicht gezeigt) drehfest befestigt ist, bildet den Abtrieb des Stellklappenreduktionsgetriebes 1 und weist ein segmentiertes 90°-Zahnrad **11** mit zwei in Drehrichtung weisenden Stirnflächen **12** auf. Das letzte Getriebeteil 4 ist über eine obere und eine untere Lagerbuchse **13, 14** in Lageröffnungen **15, 16** der beiden Lagerplatten 5, 6 drehbar gelagert, und zwar um ca. 270° verschwenkbar zwischen zwei Endstellungen, in denen das segmentierte Zahnrad 11 mit seinen Stirnflächen 12 an den Schmalseiten der beiden Laschen 7a, 7b anschlägt. Die beiden Laschen 7a, 7b bilden somit zwei Drehanschläge für das letzte Getriebeteil 4. Die beiden Laschen 7c, 7d sind auf einem größeren Radius als die Laschen 7a, 7b um die Lageröffnung 15 herum angeordnet und liegen daher außerhalb des Drehbereichs des segmentierten Zahnrades 11.

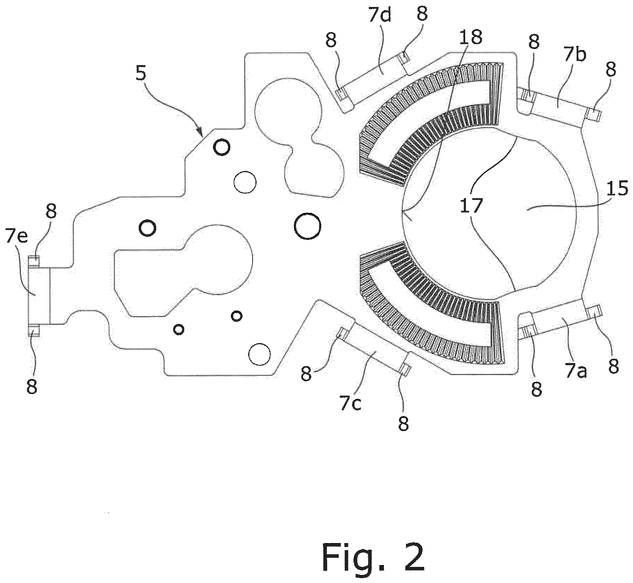

Wie in **Fig. 2** gezeigt, ist die obere Lagerplatte 5 um die Lageröffnung 15 herum im Bereich der beiden anschlagbildenden Laschen 7a, 7b durch zwei in die Lageröffnung 15 radial nach innen vorspringende, konvexe Wölbungen **17** verstärkt, die zusammen mit der gegenüberliegenden Öffnungswandung **18** eine spielfreie Dreipunktlagerung für die in der Lageröffnung 15 aufgenommene Abtriebswelle der Stellklappe bilden. Durch diese Wölbungen 17 können die beim Anschlagen an die Laschen 7a, 7b auf die Abtriebswelle wirkenden Drehmomente optimal in die obere Platte 5 eingeleitet werden.

Das Stellklappenreduktionsgetriebe1 weist außerdem noch eine Abdeckung **19** auf, die auf den Verbund aus oberer und unterer Lagerplatte 5, 6 gesteckt wird.

Ein solches dargestelltes Reduktionsgetriebe 1 ermöglicht die Übertragung hoher Drehmomente von beispielsweise 1 Nm und mehr. Die Laufzeiten an der Abtriebswelle können 0,5 Sekunden pro 90° und mehr betragen. Die beiden Endstellungen des letzten Getriebeteils 4, die durch die Laschen 7a, 7b definiert sind, können dabei beispielsweise der geschlossenen und der vollständig offenen Klappenstellung der Stellklappe im Strömungskanal entsprechen.

## Patentansprüche

1. Stellklappenreduktionsgetriebe (1) für eine elektrisch angetriebene Stellklappe zur Regelung eines Gas- oder Flüssigkeitsvolumenstroms, insbesondere auf dem Gebiet Heizung, Lüftung, Klima, Brand- oder Rauchschutz, mit zwei parallelen Lagerplatten (5, 6), zwischen denen Getriebeteile (3, 4) drehbar angeordnet sind, und mit mehreren Abstandshaltern, welche die beiden Lagerplatten (5, 6) in einem Abstand zueinander halten, wobei die mehreren Abstandshalter als Laschen (7a-7e) der einen, ersten Lagerplatte (5) ausgebildet sind, die aus der Ebene der ersten Lagerplatte (5) um 90° umgebogen sind und mindestens einen seitlichen Vorsprung (8) aufweisen, und dass die Laschen (7a-7e) mit ihren freien Laschenenden (9) in Stecköffnungen (10) der anderen, zweiten Lagerplatte (6) eingesteckt sind, bis sie mit ihrem mindestens einen seitlichen Vorsprung (8) an der zweiten Lagerplatte (6) anliegen,
**dadurch gekennzeichnet,**
**dass** eines der drehbaren Getriebeteile (3, 4) zwischen zwei Endstellungen verschwenkbar ist und in mindestens einer seiner beiden Endstellungen an einer der Laschen (7a, 7b) anliegt,
**dass** die erste Lagerplatte (5) eine Lageröffnung (15) für das verschwenkbare Getriebeteil (4) aufweist und um die Lageröffnung (15) herum im Bereich derjenigen Lasche(n) (7a, 7b) verstärkt ist, an der bzw. an denen das verschwenkbare Getriebeteil (4) in seinen Endstellungen anliegt, und
**dass** die erste Lagerplatte (5) im Bereich derjenigen Lasche(n) (7a, 7b), an der bzw. an denen das verschwenkbare Getriebeteil (4) anliegt, durch eine in die Lageröffnung (15) radial nach innen hineinragende Wölbung (17) verstärkt ist.

2. Stellklappenreduktionsgetriebe nach Anspruch 1, **dadurch gekennzeichnet, dass** der mindestens eine seitliche Vorsprung (8) in der Ebene der Lasche (7a-7e) liegt.

3. Stellklappenreduktionsgetriebe nach Anspruch 1 oder 2, **dadurch gekennzeichnet, dass** die Laschen (7a-7e) jeweils beidseitig einen seitlichen Vorsprung (8) aufweisen.

4. Stellklappenreduktionsgetriebe nach einem der vorherigen Ansprüche,
**dadurch gekennzeichnet, dass** die in die zweite Lagerplatte (6) eingesteckten, freien Laschenenden (9) und/oder der mindestens eine, an der zweiten Lagerplatte (6) anliegende, seitliche Vorsprung (8) mit der zweiten Lagerplatte (6) stoffschlüssig verbunden, insbesondere verschweißt ist.

5. Stellklappenreduktionsgetriebe nach einem der vorherigen Ansprüche,
**dadurch gekennzeichnet, dass** das verschwenkbare Getriebeteil (4) in seinen beiden Endstellungen jeweils an zwei unterschiedlichen Laschen (7a, 7b) anliegt.

6. Stellklappenreduktionsgetriebe nach einem der vorherigen Ansprüche,
**dadurch gekennzeichnet, dass** das verschwenkbare Getriebeteil (4) zwei in Drehrichtung weisende Stirnflächen (12) aufweist, die in den beiden Endstellungen jeweils an einer Lasche (7a, 7b) anliegen.

7. Stellklappenreduktionsgetriebe nach Anspruch 6, **dadurch gekennzeichnet, dass** die beiden Stirnflächen (12) an einem segmentierten Zahnrad (11) des verschwenkbaren Getriebeteils (4) vorhanden sind.

8. Stellklappenreduktionsgetriebe nach einem der vorherigen Ansprüche,
**dadurch gekennzeichnet, dass** das verschwenkbare Getriebeteil (4) einen Abtrieb des Stellklappenreduktionsgetriebes (1) ausbildet, an dem eine Stellklappe drehfest befestigt ist.

9. Stellklappenreduktionsgetriebe nach einem der vorherigen Ansprüche,
**dadurch gekennzeichnet, dass** die erste und/oder die zweite Lagerplatte (5, 6) aus Metall gebildet sind.

10. Stellklappenreduktionsgetriebe nach einem der vorherigen Ansprüche,
**dadurch gekennzeichnet, dass** die erste und/oder die zweite Lagerplatte (5, 6) ein Stanzteil, ein Laserzuschnitt, ein 3D gedrucktes Metallteil oder ein Sinterteil sind.

## Claims

1. Regulating flap reduction gear (1) for an electrically driven regulating flap for regulating a gas or liquid volume flow, in particular in the field of heating, ventilation, air conditioning, fire protection or smoke protection, comprising two parallel bearing plates (5, 6) between which gear parts (3, 4) are rotatably arranged, and a plurality of spacers which keep the two bearing plates (5, 6) at a distance from one another, wherein the plurality of spacers are designed as tabs (7a-7e) of one, first bearing plate (5), which are bent by 90° from the plane of the first bearing plate (5) and comprise at least one lateral projection (8), and the tabs (7a-7e) are inserted with their free tab ends (9) into plug-in openings (10) of the other second bearing plate (6) until their at least one lateral projection (8) rests against the second bearing plate (6), **characterized in that**
one of the rotary gear parts (3, 4) can be pivoted between two end positions and rests against one of the tabs (7a, 7b) in at least one of its two end positions,
the first bearing plate (5) comprises a bearing opening (15) for the pivotable gear part (4) and is reinforced around the bearing opening (15) in the region of that or those tab(s) (7a, 7b) against which the pivotable gear part (4) rests in its end positions, and
the first bearing plate (5) is reinforced in the region of that or those tab(s) (7a, 7b) against which the pivotable gear part (4) rests, by a bulge (17) that radially inwardly projects into the bearing opening (15).

2. Regulating flap reduction gear according to claim 1, **characterized in that** the at least one lateral projection (8) lies in the plane of the tab (7a-7e).

3. Regulating flap reduction gear according to claim 1 or 2, **characterized in that** the tabs (7a-7e) each have a lateral projection (8) on both sides.

4. Regulating flap reduction gear according to any one of the preceding claims, **characterized in that** the free tab ends (9) that are inserted into the second bearing plate (6) and/or the at least one lateral projection (8) that rests against the second bearing plate (6) is/are integrally connected to the second bearing plate (6), in particular by welding.

5. Regulating flap reduction gear according to any one of the preceding claims, **characterized in that** in each of its two end positions, the pivotable gear part (4) rests against two different tabs (7a, 7b).

6. Regulating flap reduction gear according to any one of the preceding claims, **characterized in that** the pivotable gear part (4) comprises two end faces (12) that point in the direction of rotation and rest against one tab (7a, 7b) in each of the two end positions.

7. Regulating flap reduction gear according to claim 6, **characterized in that** the two end faces (12) are provided on a segmented toothed wheel (11) of the pivotable gear part (4).

8. Regulating flap reduction gear according to any one of the preceding claims, **characterized in that** the pivotable gear part (4) forms an output of the regulating flap reduction gear (1) to which a regulating flap is fastened in a rotationally fixed manner.

9. Regulating flap reduction gear according to any one of the preceding claims, **characterized in that** the first and/or the second bearing plate (5, 6) is/are formed from metal.

10. Regulating flap reduction gear according to any one of the preceding claims, **characterized in that** the first and/or the second bearing plate (5, 6) is/are a stamped part, a laser cut, a 3D printed metal part or a sintered part.

## Revendications

1. Engrenage réducteur de clapet de réglage (1) pour un clapet de réglage entraîné électriquement et destiné à réguler un débit volumique de gaz ou de liquide, en particulier dans le domaine du chauffage, de la ventilation, de la climatisation, de la protection contre le feu ou la fumée, comportant deux plaques de support parallèles (5, 6), entre lesquelles des parties d'engrenage (3, 4) sont disposées de manière rotative, et comportant plusieurs éléments d'espacement, lesquels maintiennent les deux plaques de support (5, 6) à distance l'une de l'autre, les multiples éléments d'espacement étant réalisés sous forme de languettes (7a-7e) de la première plaque de support (5), lesquelles sont recourbées de 90° à partir du plan de la première plaque de support (5) et comprennent au moins une saillie latérale (8), et en ce que les languettes (7a-7e) sont enfichées, par leurs extrémités de languettes libres (9), dans des ouvertures d'enfichage (10) de l'autre, deuxième, plaque de support (6) jusqu'à ce qu'elle s'appuient contre la deuxième plaque de support (6) par leur au moins une saillie latérale (8),
**caractérisé**
**en ce que** l'une des parties d'engrenage rotatives (3, 4) est pivotante entre deux positions finales et s'appuie contre l'une des languettes (7a, 7b) dans au moins l'une de ses deux positions finales,
**en ce que** la première plaque de support (5) comprend une ouverture de support (15) pour la partie d'engrenage pivotante (4) et est renforcée autour de l'ouverture de support (15) dans la région de la/des languette(s) (7a, 7b) contre laquelle/lesquelles la partie d'engrenage pivotante (4) s'appuie dans ses positions finales, et en ce que la première plaque de support (5) est, dans la région de la/des languette(s) (7a, 7b) contre laquelle/lesquelles la partie d'engrenage pivotante (4) s'appuie, renforcée par un bombement (17) pénétrant radialement vers l'intérieur dans l'ouverture de support (15) .

2. Engrenage réducteur de clapet de réglage selon la revendication 1, **caractérisé en ce que** l'au moins une saillie latérale (8) se situe dans le plan de la languette (7a-7e) .

3. Engrenage réducteur de clapet de réglage selon la revendication 1 ou 2, **caractérisé en ce que** les languettes (7a-7e) comprennent une saillie latérale (8) respectivement des deux côtés.

4. Engrenage réducteur de clapet de réglage selon l'une des revendications précédentes, **caractérisé en ce que** les extrémités de languettes libres (9) enfichées dans la deuxième plaque de support (6) et/ou l'au moins une saillie latérale (8) s'appuyant contre la deuxième plaque de support (6) sont reliées à la deuxième plaque de support (6) par liaison de matière, en particulier sont soudées à celle-ci.

5. Engrenage réducteur de clapet de réglage selon l'une des revendications précédentes, **caractérisé en ce que** la partie d'engrenage pivotante (4) s'appuie contre deux languettes différentes (7a, 7b) respectivement dans ses deux positions finales.

6. Engrenage réducteur de clapet de réglage selon l'une des revendications précédentes, **caractérisé en ce que** la partie d'engrenage pivotante (4) comprend deux faces frontales (12) orientées dans le sens de rotation, lesquelles faces frontales s'appuient respectivement contre une languette (7a, 7b) dans les deux positions finales.

7. Engrenage réducteur de clapet de réglage selon la revendication 6, **caractérisé en ce que** les deux faces frontales (12) sont présentes sur une roue dentée segmentée (11) de la partie d'engrenage pivotante (4).

8. Engrenage réducteur de clapet de réglage selon l'une des revendications précédentes, **caractérisé en ce que** la partie d'engrenage pivotante (4) forme une sortie de l'engrenage réducteur de clapet de réglage (1), sortie à laquelle un clapet de réglage est fixé de manière solidaire en rotation.

9. Engrenage réducteur de clapet de réglage selon l'une des revendications précédentes, **caractérisé en ce que** la première et/ou la deuxième plaque de support (5, 6) sont formées à partir de métal.

10. Engrenage réducteur de clapet de réglage selon l'une des revendications précédentes, **caractérisé en ce que** la première et/ou la deuxième plaque de support (5, 6) sont une pièce découpée, une pièce découpée au laser, une pièce métallique produite par impression 3D ou une pièce frittée.
